(19) Europäisches Patentamt
European Patent Office
Office européen des brevets

(11) **EP 3 048 279 A1**

(12) **EUROPÄISCHE PATENTANMELDUNG**

(43) Veröffentlichungstag:
   **27.07.2016  Patentblatt 2016/30**

(51) Int Cl.:
   **F02B 19/10** *(2006.01)*    **F02M 37/00** *(2006.01)*
   **F02M 21/02** *(2006.01)*    **F02D 19/02** *(2006.01)*
   **F02B 19/12** *(2006.01)*

(21) Anmeldenummer: **16000011.3**

(22) Anmeldetag: **02.01.2016**

(84) Benannte Vertragsstaaten:
   **AL AT BE BG CH CY CZ DE DK EE ES FI FR GB GR HR HU IE IS IT LI LT LU LV MC MK MT NL NO PL PT RO RS SE SI SK SM TR**
   Benannte Erstreckungsstaaten:
   **BA ME**
   Benannte Validierungsstaaten:
   **MA MD**

(30) Priorität: **23.01.2015  AT 282015**

(71) Anmelder: **GE Jenbacher GmbH & Co. OG**
   **6200 Jenbach (AT)**

(72) Erfinder:
   • **Graus, Mario**
     **6068 Mils (AT)**
   • **Lopez, Francisco**
     **6020 Innsbruck (AT)**
   • **Schaumberger, Herbert**
     **6232 Münster (AT)**
   • **Spyra, Nikolaus**
     **6020 Innsbruck (AT)**

(74) Vertreter: **Torggler & Hofinger Patentanwälte**
   **Postfach 85**
   **6010 Innsbruck (AT)**

(54) **VERBRENNUNGSMOTOR MIT VORKAMMER**

(57)    Verbrennungsmotor mit
- wenigstens einer Vorkammer (2), welche mit einer Vorkammerzufuhrleitung (3) zur Versorgung der Vorkammer (2) mit einem Treibstoff (F) verbunden ist,
- wenigstens einer Hauptbrennkammer (4), wobei Treibstoff (F) in der Hauptbrennkammer (4) durch eine aus der wenigstens einen Vorkammer (2) in die wenigstens eine Hauptbrennkammer (4) übertretende, durch Entzündung von Treibstoff (F) in der Vorkammer (2) erzeugte Zündfackel entzündbar ist,

wobei an der Vorkammerzufuhrleitung (3) zur Reduzierung einer Druckdifferenz zwischen einer Vorkammergaszufuhr und der wenigstens einen Hauptbrennkammer (4) wenigstens ein Ventil (6.1, 6.2) vorgesehen ist,
- welches mittels einer Steuer- oder Regeleinrichtung (5) in Abhängigkeit einer für eine Veränderung einer vom Verbrennungsmotor (1) erbrachten Leistung charakteristische Größe steuer- oder regelbar ist und/oder
- mittels welchem ein durch die Vorkammerzufuhrleitung (3) zur wenigstens einen Vorkammer (2) gerichteter Vorkammertreibstoffstrom in ein von der wenigstens einen Vorkammer (2) gesondertes Volumen zumindest teilweise ableitbar ist.

Fig.

EP 3 048 279 A1

**Beschreibung**

Die Erfindung betrifft einen Verbrennungsmotor mit den Merkmalen des Oberbegriffs des Anspruchs 1 sowie ein Verfahren mit den Merkmalen des Oberbegriffs des Anspruchs 10.

Im Folgenden sei der Stand der Technik anhand des Beispiels eines stationären Gasmotors, welcher einen Generator antreibt, beschrieben. Diese verfügen im Regelfall über zwischen 10 bis 24 (meist geradzahlig viele) Zylinder, welche jeweils über eine Vorkammer gezündet werden.

Natürlich ist dabei eine möglichst konstante Drehzahl des Verbrennungsmotors wünschenswert, da eine Drehzahländerung bei mit dem Verbrennungsmotoren gekoppelten Synchrongeneratoren in eine Frequenzabweichung übertragen wird. Welche Güteklassen es bezüglich maximaler Frequenzabweichungen gibt, ist in der DIN ISO 8528-5 vorgegeben.

Schwierigkeiten treten also dann auf, wenn größere Lastveränderungen auftreten. Es werden dann verschiedene Maßnahmen getroffen, um eine Veränderung der Drehzahl des Verbrennungsmotors zu verhindern.

Diese Situation liegt beispielsweise im sogenannten Inselbetrieb vor.

Wird z.B. die vom Generator abgenommene Leistung plötzlich stark verringert (sog. Lastabwurf, englisch: load rejection), muss verhindert werden, dass sich die Drehzahl des Verbrennungsmotors erhöht. Dies kann durch verringerung der dem Verbrennungsmotor zugeführten Energiemenge bzw. die geschehen, beispielsweise durch Schließen der Drosselklappe Diesführt zu einer relativ raschen Druckverringerung im Verteilerraum (intake manifold) des Verbrennungsmotors.

Bei großen Lastabwürfen kann diese schnelle Druckverminderung im Verteilerraum (intake manifold) durch die Druckregelung für die Vorkammergaszufuhr nicht schnell genug gefolgt werden.

Ungenaue Vorkammergasdosierung kann zu instabilen Verbrennungsverhalten führen und damit zu fehlerhaftem Zündverhalten und Verpuffungen. Die bei einem Vorkammergaszufuhrsystem dabei auftretenden ungünstigen Druckdifferenzen zwischen Vorkammersystem und Verteilerraum (intake manifold) Zylinder des Verbrennungsmotors können fehlerhaftes Zündverhalten und Verpuffungen verursachen. Es wird dadurch erschwert, vorschriftsmäßige Sicherheitsstandards einzuhalten.

Aufgabe der Erfindung ist es, einen Verbrennungsmotor sowie ein Verfahren zum Betrieb eines Verbrennungsmotors bereit zu stellen, welche ein vermindertes Sicherheitsrisiko bei Lastabwürfen bieten können.

Hinsichtlich des Verbrennungsmotors wird diese Aufgabe durch die Merkmale des Anspruchs 1 gelöst. Hinsichtlich des Verfahrens wird die Aufgabe durch die Merkmale des Anspruchs 10 gelöst.

Dies geschieht, indem an der Vorkammerzufuhrleitung zur Reduzierung einer Druckdifferenz zwischen einer Vorkammergaszufuhr und der wenigstens einen Hauptbrennkammer (4) wenigstens ein Ventil vorgesehen ist, welches mittels einer Steuer- oder Regeleinrichtung in Abhängigkeit einer für eine Veränderung einer vom Verbrennungsmotor erbrachten Leistung charakteristische Größe steuer- oder regelbar ist und/oder mittels welchem ein durch die Vorkammerzufuhrleitung zur wenigstens einen Vorkammer gerichteter Vorkammertreibstoffstrom in ein von der wenigstens einen Vorkammer gesondertes Volumen zumindest teilweise ableitbar ist.

Durch ein erfindungsgemäßes Ventil können die Druckverhältnisse in der Vorkammerzufuhr schneller an jene in der Hauptkammerzufuhr des Verbrennungsmotors angepasst werden, wodurch Zündfehlverhalten und Verpuffungen erheblich unwahrscheinlicher werden. Zusätzlich ergibt sich eine verbesserte Regelung insbesondere der Drehzahl des Verbrennungsmotors bei Lastabwürfen.

Der wenigstens einen Hauptbrennkammer kann vorzugsweise ein Gemisch aus Luft und Treibstoff zugeführt werden. Der wenigstens einen Vorkammer kann vorzugsweise Treibstoff zugeführt werden, wobei sich ein Gemisch erst in der wenigstens einen Vorkammer durch Vermischung mit dem Gemisch aus der wenigstens einen Hauptbrennkammer ergibt. Es ist aber ebenso denkbar, auch der wenigstens einen Vorkammer ein Treibstoff-Luft-Gemisch zuzuführen.

Die Erfindung kann bevorzugt bei Gasmotoren eingesetzt werden. Die Erfindung kann bevorzugt bei stationären Verbrennungsmotoren eingesetzt werden. Erfindungsgemäße Verbrennungsmotoren können vorzugsweise über 10 bis 24 (meist geradzahlig viele) Zylinder als Hauptbrennkammern verfügen.

Weitere vorteilhafte Ausführungsbeispiele sind in den abhängigen Ansprüchen definiert.

Es kann dabei vorgesehen sein, dass das von der wenigstens einen Vorkammer gesonderte Volumen ein Verteilerraum (intake manifold) des Verbrennungsmotors ist. Da der überschüssige Treibstoff in der Vorkammerzufuhr bei dieser Ausführungsform direkt dem Verteilerraum (intake manifold) des Verbrennungsmotors zuführbar ist, ermöglicht dies ein besonders schnelles Angleichen der Druckverhältnisse. Alternativ oder zusätzlich zur Ableitung des Druckes in den Verteilerraum kann aber ebenso eine Öffnung in die Umgebung vorgesehen sein.

Als Verteilerraum (intake manifold) wird jener Teil des Verbrennungsmotors bezeichnet, der die Zufuhr des Treibstoff-Luft-Gemischs zum wenigstens einen Hauptbrennraum darstellt..

Bei einer Ausführungsform, bei der der Vorkammertreibstoffstrom durch Öffnung des wenigstens einen Ventils in ein von der wenigstens einen Vorkammer gesondertes Volumen ableitbar ist, kann es bevorzugt vorgesehen sein, dass das wenigstens eine Ventil ein Rückschlagventil ist. Zur Wahrung einer gewissen Druckdifferenz zwischen Verteilerraum (intake manifold) und Vorkammerzufuhr kann hier auch ein federbelastetes Ventil, insbesondere Rückschlagventil, zum Einsatz kommen.

Bei dieser Ausführungsform kann das Ventil auch als gesteuertes oder geregeltes Ventil ausgeführt sein.

Bei einer zweiten Ausführungsform kann es vorgesehen sein, dass ein durch die Vorkammerzufuhrleitung zur wenigstens einen Vorkammer gerichteter Vorkammertreibstoffstrom durch zumindest teilweise - vorzugsweise vollständige - Sperrung des wenigstens einen Ventils begrenzbar - vorzugsweise hemmbar - ist.

Bevorzugt kann es vorgesehen sein, dass das wenigstens eine Ventil mittels der Steuer- oder Regeleinrichtung in Abhängigkeit eines Wertes einer Lastveränderung steuer- oder regelbar ist. Dieser Wert einer Lastveränderung, insbesondere eines Lastabwurfs, kann auf verschiedene Weise für die Steuer-oder Regeleinrichtung bereitgestellt werden. Ist der Verbrennungsmotor mit einem Generator verbunden, welcher seinerseits einen oder mehrere elektrische Verbraucher versorgt, kann ein Lastabfall direkt an den Verbrauchern festgestellt werden und der Steuer-oder Regeleinrichtung mitgeteilt werden.

Da es aber üblich ist, gattungsgemäße Verbrennungsmotoren mit Sensoren zur Erfassung verschiedenster Messwerte auszustatten, kann es auch vorgesehen sein, dass die Steuer- oder Regeleinrichtung den Betrag von Lastveränderungen, insbesondere Lastabwürfen, selbst berechnet.

Es kann vorgesehen sein, dass in der Vorkammerzufuhrleitung - vorzugsweise auf der von der wenigstens einen Vorkammer abgewandten Seite des wenigstens einen Ventils - ein Druckregelventil oder ein Drucksteuerventil vorgesehen ist. Besonders bevorzugt vorgesehen sein kann dabei, dass ein vergleichendes Drucksteuerventil vorgesehen ist, welches über eine Membran und eine Atmungsleitung mit dem Verteilerraum (intake manifold) des Verbrennungsmotors verbunden ist.

Es ist aber ebenso denkbar, ein erfindungsgemäßes Ventil mit einem Druckregelventil oder Drucksteuerventil integral auszuführen und von der Steuer- oder Regeleinrichtung steuern oder regeln zu lassen.

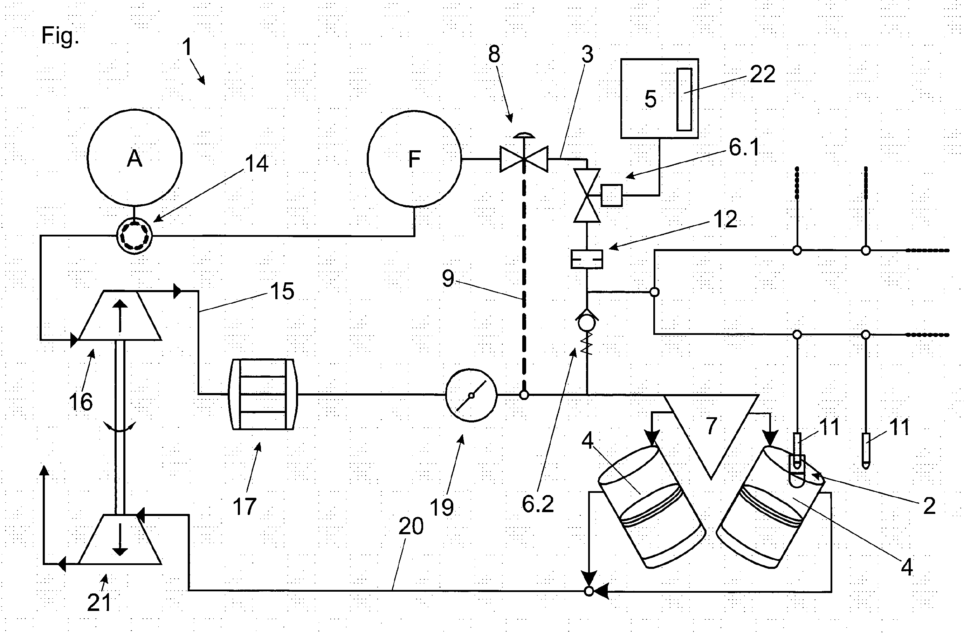

Weitere Vorteile und Einzelheiten der Erfindung sind anhand der einzigen Figur und der dazu gehörigen Figurenbeschreibung ersichtlich.

Die Figur stellt symbolisch einen erfindungsgemäßen Verbrennungsmotor 1 dar.

Dieser Verbrennungsmotor 1 verfügt über Zylinder, in welchen die Hauptbrennräume 4 angeordnet sind. Der Übersichtlichkeit halber sind jedoch nur zwei Hauptbrennräume 4 dargestellt. Jeder der Hauptbrennräume 4 wird in dieser Ausführungsform durch eine Vorkammer 2 gezündet. Dies ist ebenfalls der Übersichtlichkeit halber nur bei einem der Hauptbrennräume 4 eingezeichnet.

Die hier beschriebene Ausführungsform eines erfindungsgemäßen Verbrennungsmotors 1 kann zum Antrieb eines Generators zur Stromerzeugung dienen. Auch dieser ist der Übersichtlichkeit halber nicht eingezeichnet. Allgemein kann der Verbrennungsmotor 1 mit einer beliebigen Last verbunden sein.

Es ist eine Treibstoffquelle zur Bereitstellung von Treibstoff F vorhanden. Davon ausgehend gibt es einen ersten Zweig, der im Wesentlichen durch die Vorkammerzufuhrleitung 3 gebildet wird und zur Versorgung der wenigstens einen Vorkammer 2 dient. Ein zweiter Zweig wird im Wesentlichen von der Hauptgemischzufuhrleitung 15 gebildet. Am Beginn der Hauptgemischzufuhrleitung 15 steht eine Gemischaufbereitungseinrichtung 14, in dem ein Gemisch aus Treibstoff F und Luft A hergestellt wird. Dieses Gemisch wird dann einem Verdichter 16 eines Turboladers zugeführt. In weiterer Folge sind in der Hauptgemischzufuhrleitung 15 ein Gemischkühler 17 sowie eine Drosselklappe 19 angeordnet. Die Hauptgemischzufuhrleitung 15 mündet dann in den Verteilerraum (intake manifold) 7, aus welchem die Hauptbrennräume 4 mit dem verdichteten, gekühlten Treibstoff-Luft-Gemisch beschickt werden.

Nach dem Treibstoffreservoir ist in der Vorkammerzufuhrleitung 3 ein vergleichendes Drucksteuerventil 8 angeordnet. Dieses ist über eine Atmungsleitung 9 mit der Hauptgemischzufuhrleitung 15 bzw. dem Verteilerraum (intake manifold) 7 verbunden. Das Drucksteuerventil 8 verfügt über eine federbelastete Membran, sodass der Druck in der Vorkammerzufuhrleitung 3 auf einen Druck mit definierter Druckdifferenz zur Hauptgemischzufuhrleitung 15 bzw. zum Verteilerraum (intake manifold) 7 gesteuert wird. Der Druck in der Vorkammergaszufuhr ist in Bezug auf die Zufuhr für die Zylinder gewählt, zumindest zu jenem Zeitpunkt, an dem größere Laständerungen auftreten

Das Drucksteuerventil 8 ist in diesem Ausführungsbeispiel rein mechanischer Natur, wodurch es in der Praxis bei schnellen Laständerungen, insbesondere Lastabwürfen, nicht schnell genug reagieren kann und für einige Zeit ein zu hoher Druck in der Vorkammerzufuhrleitung 3 herrscht. Außerdem ist in der Vorkammerzufuhrleitung 3 eine Drosselblende 12 angeordnet (englisch: "gas orifice", auch bei flüssigem Treibstoff F liegt dieser an der Stelle der Drosselblende 12 in der Regel gasförmig vor).

Die Ventile 6.1 und 6.2 werden etwas weiter unten beschrieben.

Nach der Drosselblende 12 wird die Vorkammerzufuhrleitung 3 in verschiedene Zweige aufgespalten, um jede einzelne Vorkammer 2 bedienen zu können. Dieser Teil der Vorkammerzufuhrleitung 3 wird in der Regel als Vorkammer-Rail oder kurz Rail bezeichnet. Wieder ist nur einer der Zweige vollständig eingezeichnet, um die Übersichtlichkeit der Figur nicht zu beeinträchtigen.

Die Vorkammerzufuhrleitung 3 bzw. Rail ist über wenigstens ein Vorkammerventil 11 mit der wenigstens einen Vorkammer 2 verbunden. Die Vorkammerventile 11 sind in diesem Fall als passive Rückschlagventile ausgebildet. Der zuvor erwähnte leichte Überdruck in der Vorkammerzufuhrleitung 3, definiert herabgesetzt durch die Drosselblende 12, sorgt zu dem Zeitpunkt, bei dem in den Zylindern ein relativ geringer Druck herrscht dafür, dass sich die Ventile 11 öffnen und Treibstoff F in die Vorkammer strömt.

Liegt in der Vorkammerzufuhr 3 ein zu hoher Druck vor, strömt zu viel Treibstoff F in die wenigstens eine Vorkammer 2, wodurch das eingangs erwähnte Zündfehlverhalten verursacht wird.

Dem wird durch die Ventile 6.1, 6.2, in diesem Fall Sperrventile, vorgebeugt. Es ist zu bemerken, dass die beiden in der Figur dargestellten Ventile 6.1 und 6.2 zwei verschiedene Ausführungsformen darstellen, welche in Kombination aber auch für sich alleine eingesetzt werden können.

Das Ventil 6.1 ist mit einer Steuer- oder Regeleinrichtung 5 verbunden. Dieser werden über die Schnittstelle 22 Kenndaten übermittelt, welche auf Veränderungen einer vom Verbrennungsmotor 1 erbrachten Leistung schließen lassen. Diese Kenndaten können beispielsweise Messdaten von am Verbrennungsmotor 1 vorhandenen Sensoren sein, wie Ladedrucksensoren, Zylinderdrucksensoren und/oder Drehzahlsensoren. Auch an etwaigen elektrischen Verbrauchern vorhandene Sensoren sowie Kenndaten können Steuer- oder Regeleinrichtung 5 über die Schnittstelle 22 mitgeteilt werden.

Stellt die Steuer- oder Regeleinrichtung 5 einen Lastabwurf fest, wird das Ventil 6.1 zur Sperrung der Vorkammerzufuhrleitung 3 veranlasst.

Das Ventil 6.1 bleibt so lange geschlossen, bis in der Vorkammer 4 wieder mehr Gas benötigt wird. Als Kriterium kann verwendet werden, ob sich die Druckdifferenz wieder in einen gewünschten Bereich eingependelt hat.

Im konkreten Fall kann das Ventil 6.1 aufgrund eines Wertes eines Leistungsabwurfs, also der Differenz aus der Leistung des Verbrennungsmotors 1 vor und nach dem Lastabwurf, gesteuert werden. Dieser Wert wird aus dem Signal eines Drehzahlsensors (nicht dargestellt) gewonnen, wobei folgende Formel herangezogen wird:

$$\Delta P = J\, w\, \frac{dw}{dt}$$

Hierbei bezeichnet $\Delta P$ den Wert des Lastabwurfs, $J$ das Trägheitsmoment und w sowie $\frac{dw}{dt}$ die Winkelgeschwindigkeit beziehungsweise die Ableitung davon.

Das Ventil 6.2 ist als Rückschlagventil ausgebildet. Zum Zwecke der Ableitung zumindest eines Teils des Vorkammertreibstoffstroms in die Hauptgemischzufuhrleitung 15 und damit in den Verteilerraum (intake manifold) 7 ist eine zusätzliche Verbindungsleitung vorgesehen, in welcher der das Ventil 6.2 angeordnet ist. Für die Zwecke dieser Patentschrift wird der vorkammerzufuhrseitige Teil dieser Verbindungsleitung als Teil der Vorkammerzufuhrleitung betrachtet. Analog wird der hauptkammerzufuhrseitige Teil der Verbindungsleitung als Teil der Hautpgemischzufuhrleitung 15 betrachtet.

Wird in einer Ausführungsform der Erfindung kein Ventil 6.2 in einer derartigen Verbindungsleitung eingesetzt, wird die Verbindungsleitung selbst nicht notwendig sein.

Das beispielsweise als Rückschlagventil ausgebildete Ventil 6.2 ist in diesem Fall federbelastet, um die Druckdifferenz zwischen der Vorkammerzufuhrleitung 3 und der Hauptgemischzufuhrleitung 15, welche im Betrieb ständig vorliegen soll, nicht zu beeinträchtigen. Das Ventil 6.2 ist also solange gesperrt bis die Druckdifferenz zu groß wird. Dann öffnet das Ventil 6.2 und ein Druckausgleich findet statt.

Die Ausgestaltung des Ventils 6.2 als Rückschlagventil ist bevorzugt, da hierdurch ein Rückströmen des ‚Gemisches für die Zylinder in die Vorkammergaszufuhrleitung verhindert wird.

Statt einer wie in diesem Ausführungsbeispiel passiv ausgeführten Vorkammergaszufuhr kann auch eine aktive verwendet werden.

Nach der Verbrennung des Treibstoff-Luft-Gemisches in den Zylindern wird das entstandene Abgas in einer Abgasleitung 20 gesammelt und mittels eines Auspuffs oder dergleichen abgeführt. In der Abgasleitung 20 ist eine Turbine 21 des bereits erwähnten Turboladers angeordnet. Die Turbine 21 ist durch eine Welle mit dem Verdichter 16 des Turboladers verbunden.

## Patentansprüche

1. Verbrennungsmotor mit

   - wenigstens einer Vorkammer (2), welche mit einer Vorkammerzufuhrleitung (3) zur Versorgung der Vorkammer (2) mit einem Treibstoff (F) verbunden ist,
   - wenigstens einer Hauptbrennkammer (4), wobei Treibstoff (F) in der Hauptbrennkammer (4) durch eine aus der wenigstens einen Vorkammer (2) in die wenigstens eine Hauptbrennkammer (4) übertretende, durch Entzündung von Treibstoff (F) in der Vorkammer (2) erzeugte Zündfackel entzündbar ist,

   **dadurch gekennzeichnet, dass** an der Vorkammerzufuhrleitung (3) zur Reduzierung einer Druckdifferenz zwischen einer Vorkammergaszufuhr und der wenigstens einen Hauptbrennkammer (4) wenigstens ein Ventil (6.1, 6.2) vorgesehen ist,

   - welches mittels einer Steuer- oder Regeleinrichtung (5) in Abhängigkeit einer für eine Veränderung einer vom Verbrennungsmotor (1) erbrachten Leistung charakteristische Größe steuer- oder regelbar ist
und/oder
- mittels welchem ein durch die Vorkammerzufuhrleitung (3) zur wenigstens einen Vorkammer (2) gerichteter Vorkammertreibstoffstrom in ein von der wenigstens einen Vorkammer (2) gesondertes Volumen zumindest teilweise ableitbar ist.

2. Verbrennungsmotor nach Anspruch 1, **dadurch gekennzeichnet, dass** das von der wenigstens einen Vorkammer (2) gesonderte Volumen eine Hauptkammerzufuhrleitung (15) und/oder ein Verteilerraum (7) des Verbrennungsmotors (1) ist.

3. Verbrennungsmotor nach Anspruch 1 oder 2, **dadurch gekennzeichnet, dass** das wenigstens eine Ventil (6.1, 6.2) ein Rückschlagventil ist.

4. Verbrennungsmotor nach einem der Ansprüche 1 bis 3, **dadurch gekennzeichnet, dass** der Vorkammertreibstoffstrom durch zumindest teilweise - vorzugsweise vollständige - Sperrung des wenigstens einen Ventils (6.1, 6.2) begrenzbar - vorzugsweise hemmbar - ist.

5. Verbrennungsmotor nach einem der Ansprüche 1 bis 4, **dadurch gekennzeichnet, dass** das wenigstens eine Ventil (6.1, 6.2) mittels der Steuer- oder Regeleinrichtung (5) in Abhängigkeit eines Wertes einer Lastveränderung steuer- oder regelbar ist.

6. Verbrennungsmotor nach einem der Ansprüche 1 bis 5, **dadurch gekennzeichnet, dass** in der Vorkammerzufuhrleitung (3) - vorzugsweise auf einer von der wenigstens einen Vorkammer (2) abgewandten Seite des wenigstens einen Ventils (6.1, 6.2) - ein Druckregelventil oder ein Drucksteuerventil (8) vorgesehen ist.

7. Verbrennungsmotor nach Anspruch 6, **dadurch gekennzeichnet, dass** ein vergleichendes Drucksteuerventil (8) vorgesehen ist, welches über eine Atmungsleitung (9) mit dem Verteilerraum (7) des Verbrennungsmotors (1) verbunden ist.

8. Verbrennungsmotor nach einem der Ansprüche 1 bis 7, **dadurch gekennzeichnet, dass** die wenigstens eine Vorkammer (2) je über wenigstens ein Vorkammerventil (11) mit der Vorkammerzufuhrleitung (3) verbunden ist.

9. Verbrennungsmotor nach Anspruch 8, **dadurch gekennzeichnet, dass** das wenigstens eine Vorkammerventil (11) ein passives Rückschlagventil ist.

10. Verfahren zum Betreiben eines Verbrennungsmotors, wobei wenigstens einer Vorkammer (2) über eine Vorkammerzufuhrleitung (3) Treibstoff (F) zugeführt wird und Treibstoff (F) in einer Hauptbrennkammer (4) durch eine aus der wenigstens einen Vorkammer (2) in die wenigstens eine Hauptbrennkammer (4) übertretende, durch Entzündung von Treibstoff (F) in der Vorkammer (2) erzeugte Zündfackel entzündet wird, **dadurch gekennzeichnet, dass** zur Reduzierung einer Druckdifferenz zwischen einer Vorkammergaszufuhr und der wenigstens einen Hauptbrennkammer (4) wenigstens ein an der Vorkammerzufuhrleitung (3) angeordnetes Ventil (6.1, 6.2) verwendet wird,

- welches in Abhängigkeit einer für eine Veränderung einer vom Verbrennungsmotor (1) erbrachten Leistung charakteristische Größe gesteuert oder geregelt wird
und/oder
- mittels welchem ein durch die Vorkammerzufuhrleitung (3) zur wenigstens einen Vorkammer (2) gerichteter Vorkammertreibstoffstrom in ein von der wenigstens einen Vorkammer (2) gesondertes Volumen zumindest teilweise abgeleitet wird.

Fig. 1

**EP 3 048 279 A1**

Europäisches
Patentamt

European
Patent Office

Office européen
des brevets

# EUROPÄISCHER RECHERCHENBERICHT

**Nummer der Anmeldung**

EP 16 00 0011

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 638 777 A (FANNER JOHN C [US] ET AL) 27. Januar 1987 (1987-01-27) * Spalte 2, Zeile 20 - Zeile 25; Abbildungen 1-3 * * Spalte 2, Zeile 45 - Spalte 4, Zeile 2 * ----- | 1-10 | INV. F02B19/10 F02M37/00 F02M21/02 F02D19/02 F02B19/12 |
| X<br>A | JP 2009 221937 A (OSAKA GAS CO LTD) 1. Oktober 2009 (2009-10-01) * Zusammenfassung; Abbildungen 1,2 * ----- | 1,3-6, 8-10<br>2,7 | |
| X<br>A | DE 10 2009 012250 A1 (MAN DIESEL SE [DE]) 9. September 2010 (2010-09-09) * Absatz [0045] - Absatz [0070]; Abbildung 1 * ----- | 1,4-6,8, 10<br>2,3,7,9 | |
| X<br>A | JP 2009 299593 A (OSAKA GAS CO LTD) 24. Dezember 2009 (2009-12-24) * Zusammenfassung; Abbildung 1 * ----- | 1-4,6-10<br>5 | |

| | RECHERCHIERTE SACHGEBIETE (IPC) |
|---|---|
| | F02B F02M F02D |

Der vorliegende Recherchenbericht wurde für alle Patentansprüche erstellt

| Recherchenort | Abschlußdatum der Recherche | Prüfer |
|---|---|---|
| München | 19. Mai 2016 | Martinez Cebollada |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    ...........................................................................
& : Mitglied der gleichen Patentfamilie, übereinstimmendes
    Dokument

EPO FORM 1503 03.82 (P04C03)

# EP 3 048 279 A1

**ANHANG ZUM EUROPÄISCHEN RECHERCHENBERICHT**
**ÜBER DIE EUROPÄISCHE PATENTANMELDUNG NR.**

EP 16 00 0011

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-05-2016

| Im Recherchenbericht angeführtes Patentdokument | Datum der Veröffentlichung | Mitglied(er) der Patentfamilie | Datum der Veröffentlichung |
|---|---|---|---|
| US 4638777 A | 27-01-1987 | KEINE | |
| JP 2009221937 A | 01-10-2009 | JP 5090974 B2<br>JP 2009221937 A | 05-12-2012<br>01-10-2009 |
| DE 102009012250 A1 | 09-09-2010 | CN 101907028 A<br>DE 102009012250 A1<br>FI 20105135 A<br>JP 4981879 B2<br>JP 2010209908 A<br>KR 20100101042 A | 08-12-2010<br>09-09-2010<br>08-09-2010<br>25-07-2012<br>24-09-2010<br>16-09-2010 |
| JP 2009299593 A | 24-12-2009 | JP 5065168 B2<br>JP 2009299593 A | 31-10-2012<br>24-12-2009 |

EPO FORM P0461

Für nähere Einzelheiten zu diesem Anhang : siehe Amtsblatt des Europäischen Patentamts, Nr.12/82

8